# EUROPEAN PATENT APPLICATION

(11) **EP 4 496 114 A1**
(43) Date of publication of application: **22.01.2025**
(21) Application number: 22941002.2
(22) Date of filing: 07.05.2022
(51) Int. Cl.: H01M 50/593, H01M 50/588, H01M 10/0525, H01M 50/571

(54) **BATTERY CELL AND MANUFACTURING METHOD THEREFOR, BATTERY, AND ELECTRIC DEVICE**

(71) Applicant: Contemporary Amperex Technology Co., Limited, Ningde, Fujian 352100 (CN)
(72) Inventor: CHEN, Wei, Ningde, Fujian 352100 (CN); ZOU, Qifan, Ningde, Fujian 352100 (CN); ZHU, Jianping, Ningde, Fujian 352100 (CN)
(74) Representative: Jacob, Reuben Ellis
(86) International application number: PCT/CN2022/091519
(87) International publication number: WO 2023/216033

(57) **Abstract**

Embodiments of the present application provide a battery cell and a manufacturing method therefor, a battery, and an electric device. The battery cell (100) comprises: a housing assembly (10) comprising a housing (1), the housing (1) being provided with an opening (11), outer surfaces of the housing (1) comprising at least one connecting surface, and the connecting surface being used for fixing the battery cell (100); and an insulating layer (2) comprising an insulating coating (21) and an insulating film (22), the insulating coating (21) covering at least a partial region of the connecting surface, and the insulating film (22) covering at least the regions of the outer surfaces of the housing (1) located outside the insulating coating (21).

## Description

### TECHNICAL FIELD

The present application relates to the technical field of batteries, and in particular relates to a battery cell, a manufacturing method thereof, a battery, and an electric device.

### BACKGROUND

Lithium-ion batteries (LIBs) have advantages such as high energy density, high power density, long service life, and long storage time, etc., and thus have been widely used in electric vehicles.

However, how to improve reliability and safety of batteries in electric vehicles during use has always been a challenge in the field of batteries.

### SUMMARY

An objective of the present application is to improve the reliability and the safety of a battery during use.

According to a first aspect of the present application, a battery cell is provided, including:
a housing, where the housing has an opening, and an outer surface of the housing includes at least one connection surface configured to fix the battery cell; and
an insulation layer including an insulation coating and an insulation film, where the insulation coating covers at least a portion of one connection surface, and an outer surface of the insulation film that covers the housing is located outside the insulation coating.

In this embodiment, a combination of the insulation coating and the insulation film is adopted as the insulation layer of the housing. Because the insulation coating has a strong bonding force with an outer surface of the housing, the pasting of the insulation coating on the connection surface improves a shear strength between the insulation coating and the housing, such that, even if the battery cell is subjected to a vibration or impact during use to make the connection surface undergo a large shear force, the insulation coating can also be prevented from falling off, which can ensure the insulation reliability. Moreover, when the battery cell is used in a high-temperature and high-humidity environment, it can also ensure that the insulation coating is tightly bonded to the housing. For example, in a structure in which the battery cell is directly used to assemble a battery without producing a module, the battery cell can bear a large shear force, and the fixation of the battery cell through the connection surface at which the insulation coating is located can also meet the requirements of insulation performance of the housing.

In addition, a region without the insulation coating on an outer surface of the housing is provided with the insulation film, which can avoid the problem that a spraying solution of the insulation coating cannot be retained at a rounded corner of the housing to cause a too-thin coating, and can reliably cover an outer surface of the housing, thereby ensuring a quality of the insulation layer and the insulation reliability. The pasting of the insulation film has a low cost, which can reduce a production cost of the battery cell.

Thus, the composite insulation with the insulation coating and the insulation film in the present application can improve a bonding force of the insulation layer with the connection surface and the housing to improve the reliability and safety of working of the battery cell, can avoid the disadvantage that the pasting of the insulation coating can hardly allow a high coating quality and leads to a high cost, and can make the insulation reliability of the battery cell and the application cost of the insulation layer balanced.

In some embodiments, the insulation coating covers a portion of the connection surface, the insulation coating is located in an intermediate region of the connection surface, and a region of the connection surface located outside the insulation coating is covered by the insulation film.

By allowing the insulation coating to cover a portion of the connection surface, this embodiment can avoid the problem that a spraying solution of the insulation coating can hardly be retained at a rounded corner of the housing, and can ensure the consistency of an overall thickness of the insulation coating, thereby improving a quality of the insulation coating and the insulation reliability. Moreover, the insulation coating is arranged on a plane, and the insulation film is bonded to the insulation coating on the plane, which can reduce the process difficulty and cost of pasting of the insulation coating. Since the insulation coating is arranged in the intermediate region of the connection surface, after the battery cell is arranged, the insulation coating can mainly bear a shear force, which can reduce the process difficulty and cost of pasting of the insulation coating on the basis of ensuring a bonding force between the insulation layer on the connection surface and the housing.

In some embodiments, the insulation coating fully covers the connection surface.

In this embodiment, since the insulation coating fully covers the connection surface, after the battery cell is arranged, a shear force for the entire connection surface can be borne through the insulation coating; and because the insulation coating has a large bonding force with the housing, on the basis of ensuring a quality of the insulation layer and controlling a cost, a shear strength of the insulation layer on the connection surface can be maximized to prevent the insulation layer on the connection surface from falling off from the housing, which ensures the insulation reliability, thereby improving the reliability and safety of working of the battery cell.

In some embodiments, the insulation coating further covers a region on the housing that is adjacent to the connection surface fully covered by the insulation coating.

In this embodiment, the insulation film can be prevented from bending to the connection surface with the insulation coating, which can reduce the process difficulty of pasting of the insulation film, improve the bonding reliability of the insulation film, and avoid the problem that the insulation film is not easily bonded to and is easily disconnected from an edge of the housing. Thus, this arrangement manner can reduce the difficulty of pasting of the insulation film on the basis of ensuring the insulation reliability for the housing.

In some embodiments, the insulation coating has an overlap region with the insulation film.

In this embodiment, the arrangement of the overlap region between the insulation coating and the insulation film can make the two well cover a surface of the housing in a bonding zone, such that, even if the insulation film undergoes a thermal deformation (shrinkage) and cracks or an edge is warped due to falling-off of an adhesive, the surface of the housing is not easily exposed, thereby ensuring the insulation reliability for the housing and improving the reliability and safety of working of the battery cell.

In some embodiments, in a thickness direction of the insulation layer, the insulation film is located outside the insulation coating in the overlap region.

In this embodiment, the insulation film is located outside the insulation coating in the overlap region, such that an edge of the insulation film can be attached to a surface of the stable insulation coating with a large bonding force, which improves a connection strength of a junction between the insulation film and the insulation coating and avoids the occurrence of weak points that causes the tearing of the insulation film, and thereby improving the insulation reliability for the housing.

In some embodiments, the insulation film has the overlap region with an entire periphery of the insulation coating.

In this embodiment, the arrangement of the overlap region between the insulation film and the entire periphery of the insulation coating can make the two reliably cover a surface of the housing in a bonding zone, such that, even if the insulation film undergoes a thermal deformation (shrinkage) and cracks or an edge is warped due to falling-off of an adhesive, the surface of the housing is not easily exposed, thereby maximally ensuring the insulation reliability for the housing and improving the reliability and safety of working of the battery cell.

In some embodiments, the insulation film has overlap regions of equal widths with the periphery of the insulation coating.

In this embodiment, the insulation film has overlap regions of equal widths with the periphery of the insulation coating, such that a bonding zone between the insulation film and the insulation coating has a uniform connection strength at different positions in a circumferential direction, which can not only improve the adhesion quality of the insulation layer to ensure the insulation reliability for the housing, but also reduce the cutting difficulty of the insulation film and the consumption of materials.

In some embodiments, the insulation film is bonded to the housing in a region outside the insulation coating, and the insulation film is bonded to the insulation coating in the overlap region.

In this embodiment, since the wrapping of the insulation film is performed through bonding, the insulation film can be reliably applied by a simple process; and because there is a large adhesion force between the insulation coating and an outer surface of the housing, the bonding of an edge of the insulation film to the insulation coating can prevent the disconnection between the two, thereby improving the insulation reliability.

In some embodiments, a surface of the housing that is provided with the insulation coating is a first surface of the housing that is away from the opening.

In this embodiment, when the battery cell is placed vertically, if a battery with the battery cell is subjected to a vibration and impact, a shear force will be generated between the first surface and a case assembly, and because the first surface covered by the insulation coating can bear the shear force generated between the first surface and the case assembly, the insulation layer on the first surface can be prevented from falling off, which improves the insulation reliability for the housing.

In some embodiments, a surface of the housing that is provided with the insulation coating is a second surface of the housing that is adjacent to the opening and has a relatively large area.

In this embodiment, when the battery cell is placed horizontally, if a battery with the battery cell is subjected to a vibration and impact, a shear force will be generated between the second surface and an inner bottom surface of a case and between the second surface and an inner top surface of a cover body or between adjacent battery cells, and because the second surface covered by the insulation coating can bear the shear force generated between the second surface and the inner bottom surface of the case and between the second surface and the inner top surface of the cover body or between the adjacent battery cells, the insulation layer on the second surface can be prevented from falling off, which improves the insulation reliability for the housing.

According to a second aspect of the present application, a battery is provided, including: a case and the battery cell described in the above embodiments, where the battery cell is arranged in the case.

In this embodiment, the use of the combination of the insulation coating and the insulation film as the insulation layer in the battery cell can improve a bonding force of the insulation layer with the connection surface and the housing to improve the reliability and safety of working of the battery, can avoid the disadvantage that the pasting of the insulation coating can hardly allow a high coating quality and leads to a high cost, and can make the insulation reliability of the battery cell and the application cost of the insulation layer balanced.

In some embodiments, the case assembly includes a case, the connection surface includes the first surface of the housing that is away from the opening, the first surface is provided with the insulation coating, and the first surface is connected to an inner bottom surface of the case through a bonding layer.

In this embodiment, for a battery cell arranged vertically, because the first surface of the housing that is connected to the inner bottom surface of the case is provided with the insulation coating, if the battery is subjected to a vibration and impact, a shear force will be generated between the first surface and the inner bottom surface of the case; and because the first surface covered by the insulation coating can bear the shear force generated between the first surface and the inner bottom surface of the case, the insulation layer on the first surface can be prevented from falling off, which improves the insulation reliability for the housing.

In some embodiments, the case assembly includes the case and a cover body that are fastened with each other; the connection surface includes the second surface of the housing that is adjacent to the opening and has a relatively large area, and the second surface is provided with the insulation coating; and
the second surface is connected to an inner bottom surface of the case through a bonding layer, or the second surface is connected to an inner top surface of the cover body through a bonding layer, or the second surface is connected to an adjacent battery cell through a bonding layer.

In this embodiment, for a battery cell arranged horizontally, if the battery is subjected to a vibration and impact, a shear force will be generated between the second surface and an inner bottom surface of a case and between the second surface and an inner top surface of a cover body or between adjacent battery cells, and because the second surface covered by the insulation coating can bear the shear force generated between the second surface and the inner bottom surface of the case and between the second surface and the inner top surface of the cover body or between the adjacent battery cells, the insulation layer on the second surface can be prevented from falling off, which improves the insulation reliability for the housing.

In some embodiments, the insulation coating covers a portion of the connection surface, the insulation coating is located in an intermediate region of the connection surface, and a region of the connection surface located outside the insulation coating is covered by the insulation film;
the insulation coating has the overlap region with the insulation film; in the thickness direction of the insulation layer, the insulation film is located outside the insulation coating in the overlap region; and a thickness of the bonding layer in the insulation coating is greater than a thickness of the insulation film.

In this embodiment, the bonding layer can be allowed to fill a region of the insulation coating that is recessed inward with respect to the insulation film, such that the insulation layer on the connection surface forms a plane for fixation to prevent a virtual contact between the insulation coating and a surface to be fixed, and the insulation coating can mainly bear a shear force between the connection surface and the surface to be fixed to prevent the insulation film on the connection surface that is located on the periphery of the insulation coating from bearing excessive shear force, which can prevent the insulation film from falling off and improve the reliability of connection between the insulation film and the insulation coating, thereby ensuring the insulation reliability for the housing.

According to a third aspect of the present application, an electric device including the battery described in the above embodiments is provided, where the battery is provided to supply electric energy for the electric device.

According to a fourth aspect of the present application, a manufacturing method of a battery cell is provided, including:
component preparation step of providing a housing, where the housing has an opening, and an outer surface of the housing includes at least one connection surface configured to fix the battery cell;
coating pasting step of pasting an insulation coating on an outer surface of the housing, where the insulation coating covers at least a portion of one connection surface; and
insulation film wrapping step of wrapping an insulation film around the outer surface of the housing, where an outer surface of the insulation film that covers the housing is located outside the insulation coating.

In this embodiment, the use of the composite insulation with the insulation coating and the insulation film in the manufacturing method of a battery cell can improve a bonding force of the insulation layer with the connection surface and the housing to improve the reliability and safety of working of the battery cell, can avoid the disadvantage that the pasting of the insulation coating can hardly allow a high coating quality and leads to a high cost, and can make the insulation reliability of the battery cell and the application cost of the insulation layer balanced.

In some embodiments, the insulation coating has an overlap region with the insulation film; the coating pasting step is performed before the insulation film wrapping step; and the insulation film is bonded to the insulation coating in the overlap region.

In this embodiment, the overlap region of the insulation film is bonded to the exterior of the insulation coating, due to this arrangement, an edge of the insulation film can be attached to a surface of the stable insulation coating with a large bonding force, a connection strength of a junction between the insulation film and the insulation coating is improved, the occurrence of weak points that causes the tearing of the insulation film is avoided, and the insulation reliability for the housing is improved accordingly.

### BRIEF DESCRIPTION OF THE DRAWINGS

To describe the technical solutions in the embodiments of the present application clearly, the accompanying drawings required to describe the embodiments of the present application are briefly described below. Apparently, the accompanying drawings described below are merely some embodiments of the present application. A person of ordinary skill in the art may further derive other accompanying drawings based on these accompanying drawings without creative efforts.
FIG. 1 is a schematic structural diagram of some embodiments of arrangement of a battery in a vehicle in the present application;
FIG. 2 is an exploded view of some embodiments of the battery of the present application;
FIG. 3 is a schematic structural diagram of some embodiments of the battery cell of the present application;
FIG. 4 is a schematic diagram illustrating an internal structure of some embodiments of the battery cell of the present application;
FIG. 5 is a schematic structural diagram for fixation of a battery cell on an inner bottom surface of a case in the present application;
FIG. 6 is a schematic structural diagram of a first embodiment of the battery cell of the present application;
FIG. 7 is a schematic structural diagram of a first surface in the battery cell shown in FIG. 6;
FIG. 8 is a schematic structural diagram of a multi-layer insulation film;
FIG. 9 is a schematic structural diagram of a second embodiment of the battery cell of the present application;
FIG. 10 is a schematic structural diagram of a third embodiment of the battery cell of the present application;
FIG. 11 is a schematic structural diagram of two layers of battery cells arranged horizontally in the present application;
FIG. 12 is a schematic structural diagram of a fourth embodiment of the battery cell of the present application;
FIG. 13 is a schematic flow chart of some embodiments of a manufacturing method of an electrode assembly of the present application; and

The accompanying drawings each are not plotted according to an actual scale.

Reference numerals are listed below:
100: battery cell; 1: housing; 11: opening; 2: insulation layer; 21: insulation coating; 22: insulation film; 221: film layer; 222: adhesive layer; 3: electrode assembly; 31: tab; 4: switching member; 5: end cover assembly; 51: end cover body; 52: electrode terminal; 6: electrolyte; 7: bonding layer; S1: first surface; S2: second surface; S3: third surface; S: overlap region;
200: battery; 201: case assembly; 201A: case; 201B: cover body;
300: vehicle; 301: axle; 302: wheel; 303: motor; and 304: controller.

### DETAILED DESCRIPTION OF THE EMBODIMENTS

The implementations of the present application are described in further detail below with reference to the accompanying drawings and embodiments. The following detailed description of embodiments and the accompanying drawings are intended to illustrate the principle of the present application exemplarily, but may not be intended to limit the scope of the present application, that is, the present application is not limited to the described embodiments.

In the description of the embodiments of the present application, the term "a plurality of" refers to two or more, and similarly, "a plurality of groups" refers to two or more groups and "a plurality of electrodes" refers to two or more electrodes.

The terms such as "upper", "lower", "top", "bottom", "front", "rear", "inside", and "outside" used in the present application to indicate orientation or position relationships are merely intended to facilitate the description of the present application, and do not indicate or imply that the mentioned device must have a specific orientation and must be constructed and operated in a specific orientation, and thus, these terms cannot be understood as a limitation to the protection scope of the present application.

Moreover, the terms "first", "second", and "third" are merely used for description, and are not intended to indicate or imply relative importance. The term "perpendicular" does not mean that it is strictly perpendicular, but within an allowable range of error. The term "parallel" does not mean that it is strictly parallel, but within an allowable range of error. Orientation terms appearing in the following description indicate the directions shown in the accompanying drawings, and do not limit a specific structure of the present application.

In the description of the present application, it should be noted that, unless otherwise clearly specified and limited, the terms "arrangement" and "connection" should be understood in a broad sense. For example, the "connection" may be a fixed connection, a removable connection, or an integrated connection, and may be a direct connection or an indirect connection through an intermediate medium. Those of ordinary skill in the art may understand the specific meanings of the above terms in the present application based on specific situations.

The "embodiment" mentioned herein means that a specific feature, structure, or characteristic described in combination with the embodiment may be included in at least some embodiments of the present application. The term appearing in different parts of the specification does not necessarily refer to the same embodiment or an independent or alternative embodiment exclusive of other embodiments. It may be explicitly or implicitly appreciated by those skilled in the art that the embodiments described herein may be combined with other embodiments.

The battery mentioned in the embodiments of the present application refers to a single physical module including a plurality of battery cells to provide a high voltage and capacity. For example, the battery mentioned in the present application may include a battery module, a battery pack, or the like.

The battery cell may include a lithium-ion secondary battery, a lithium-ion primary battery, a lithium-sulfur battery (LSB), a sodium/lithium-ion battery, a sodium-ion battery (SIB), a magnesium-ion battery (MIB), or the like, but the embodiments of the present application are not limited thereto. The battery cell may be in a cylindrical shape, a flat shape, a cuboid shape, or another shape, but the embodiments of the present application are not limited thereto. The battery cell may generally include the following three types according to a packaging manner: a cylindrical battery cell, a cubic battery cell, and a pouch battery cell, but the embodiments of the present application are not limited thereto.

The current battery cell typically includes a housing, an electrode assembly accommodated in the housing, and an electrolyte filled in the housing. The electrode assembly is produced mainly by stacking or winding a first electrode plate and a second electrode plate that have opposite polarities, where an insulation part such as a separator is usually arranged between the first electrode plate and the second electrode plate. A portion of the first electrode plate and a portion of the second electrode plate that each are coated with an active material constitute a major part of the electrode assembly; and a portion of the first electrode plate and a portion of the second electrode plate that each are not coated with the active material serve as a first tab and a second tab, respectively. In an LIB, the first electrode plate may be a positive electrode including an anode current collector and an anode active material layer arranged at two sides of the anode current collector, where a material of the anode current collector may be aluminum, for example, and an anode active material may be lithium cobalt oxide (LCO), lithium iron phosphate (LFP), lithium nickel-manganese-cobalt oxide (LNMCO), or lithium manganese oxide (LMO), for example; and the second electrode plate may be a negative electrode including a cathode current collector and a cathode active material layer arranged at two sides of the cathode current collector, where a material of the cathode current collector may be copper, for example, and a cathode active material may be graphite or silicon, for example. Optionally, the first electrode plate may also be a negative electrode, and correspondingly, the second electrode plate may be a positive electrode. The first tab and the second tab may be together located at an end of the major part or respectively at two ends of the major part. During a charge-discharge process of the battery cell, the anode active material and the cathode active material react with the electrolyte, and the tabs are connected to terminals to form a current loop.

After long-term use, the current battery will have poor working reliability and safety, and the inventors have found through research that the easy short circuit of the battery due to poor insulation performance during working is a main factor causing this problem. According to analysis, a housing of the battery is generally made of aluminum or steel. Because the housing and an electrolyte inside the battery are at an equal potential, when a plurality of battery cells are connected in series, the housing is also at different potentials, and the housing is subjected to an electrostatic potential, with a small electricity quantity, but a high voltage. As a result, if the housing is conductive through an outside, there will be a risk of high-voltage short circuit or corrosion. In order to avoid safety problems such as damage or short circuit of a surface of the housing of the battery, an insulation layer needs to be arranged on the surface of the housing of the battery.

A method conceived by the inventors is as follows: after a battery is assembled, an insulation film is wrapped around an outer surface of a housing. The method of wrapping the insulation film faces the following problems during use of the battery: 1. The insulation film is prone to bubbles during an application process, and when the battery is used at a high voltage, air in the bubbles undergoes ionization to break through the insulation film. 2. In a long-term high-temperature and high-humidity environment, moisture is easily penetrated between the housing and the insulation film to decrease a viscosity of an adhesive, such that the insulation film easily falls off to cause failed insulation. 3. The adhesive between the insulation film and the housing is a semi-solid gel, which has a specified fluidity under a large shear force and has a shear strength usually of no more than 1 MPa. When there is a shear force of more than 1 MPa between the insulation film and the housing, the insulation film will fall off from the housing, resulting in failed insulation. At present, a mainstream pasting of LIBs is the highly integrated Cell To Pack (CTP) technology, and a basic idea of the CTP technology is as follows: the module concept is got rid of, and a battery cell is directly bonded to a bottom plate of a case of a battery pack through a structural adhesive to fix the battery cell. Through system-level simulation, a shear force may exceed 5 MPa, and in this case, the insulation film will fail off, and thus the pasting of the insulation film can hardly meet the bonding strength requirements.

In order to improve an adhesion strength of the insulation layer, another method conceived by the inventors is as follows: an insulation material is directly spray-coated on a surface of a housing of a battery, and then dried and cured to form an insulation coating. The insulation coating formed after the spray-coating and curing has excellent insulation performance, wear resistance, and heat resistance, and a shear strength of the insulation coating with a case of a battery pack can exceed 5 MPa, which can meet the shear strength requirements under application conditions such as CTP. However, during an actual use process, it is found that the spray-coated insulation layer also has the following problems: 1. Because corners and vertex angles of a housing of a battery cell often have a too-small fillet, a spraying solution cannot be retained at these positions, and a formed coating is too thin, has a low quality, and cannot completely cover the surface, resulting in failed insulation. 2. A cost of spray-coating is often higher than a cost of pasting of the insulation film, especially a manufacturing cost.

Therefore, when the insulation layer is arranged on an outer surface of a housing of an LIB cell, it is necessary to comprehensively consider factors such as shear strength, coating quality, and cost and solve the problem that there is a contradiction between the shear strength of the insulation layer and the coating quality and cost. Therefore, the inventors propose a way to combine an insulation film with an insulation coating to take advantage of arrangement of the insulation film and the insulation coating. Based on this idea, the present application provides an improved battery cell.

The battery cell of the embodiments of the present application is suitable for a battery and an electric device using the battery.

The electric device may be a mobile phone, a portable device, a laptop, an electric motorcycle, an electric vehicle, a steamship, a spacecraft, an electric toy, an electric tool, or the like. For example, the spacecraft includes an airplane, a rocket, a spaceshuttle, and a spaceship; the electric toy includes a stationary or mobile electric toy, such as a game console, an electric toy car, an electric toy ship, and an electric toy plane; and the electric tool includes a metal cutting electric tool, a grinding electric tool, an assembly electric tool, and a railway electric tool, such as an electric drill, an electric grinding machine, an electric wrench, an electric screwdriver, an electric hammer, an electric impact drill, a concrete vibrator, and an electric planer.

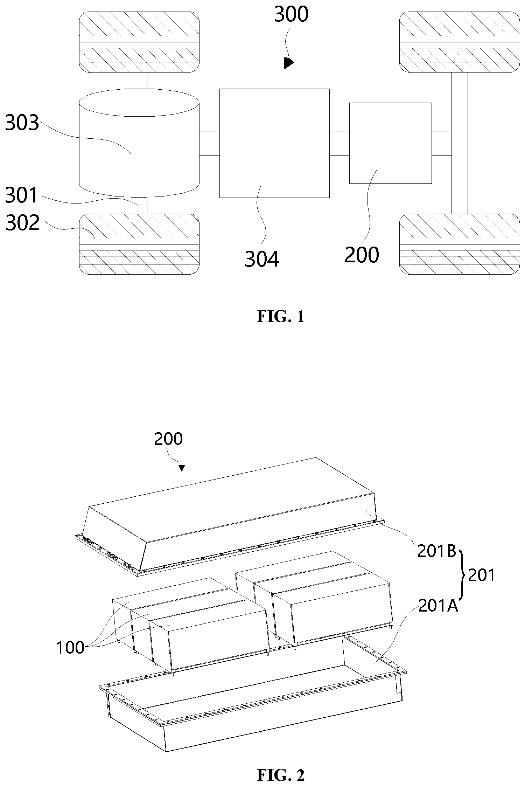

As shown in FIG. 1, the electric device can be a vehicle 300, such as a new energy vehicle, and the new energy vehicle can be a pure electric vehicle, a hybrid electric vehicle (HEV), or a range-extended electric vehicle (REEV); or the electric device can also be a drone or a steamship. Specifically, the vehicle 300 may include an axle 301, wheels 302 connected to the axle 301, a motor 303, a controller 304, and a battery 200, where the motor 303 is configured to drive the axle 301 to rotate; the controller 304 is configured to control the motor 303 to work; and the battery 200 may be arranged at a bottom, a head, or a tail of the vehicle 300 to supply electric energy for working of the motor 303 and other components in the vehicle.

As shown in FIG. 2, the battery 200 includes a case assembly 201 and a battery cell 100. In the battery 200, there may be one or more battery cells 100. If a plurality of battery cells 100 are provided, the plurality of battery cells 100 can be connected in series, parallel, or parallel-series, where the parallel-series connection means that some of the plurality of battery cells 100 are connected in series and some of the plurality of battery cells are connected in parallel; the plurality of battery cells 100 are first connected in series, parallel, or parallel-series to produce a plurality of battery modules, and the plurality of battery modules are then connected in series, parallel, or parallel-series as a whole and accommodated in the case assembly 201; and the plurality of battery cells 100 may also be directly connected in series, parallel, or parallel-series as a whole and then accommodated in the case assembly 201.

There is a hollow structure inside the case assembly 201. For example, the case assembly 201 may include a case 201A and a cover body 201B that are fastened with each other. For example, the case 201A and the cover body 201B may both be a hollow cuboid and each include only one face as an opening face, an opening of the case 201A and an opening of the cover body 201B are arranged oppositely, and the case 201A and the cover body 201B are snapped to each other to produce the case assembly with a closed chamber. Alternatively, the case 201A is a cuboid with an opening and the cover body 201B is a plate, or the cover body 201B is a cuboid with an opening and the case 201A is a plate; and the case 201A and the cover body 201B are arranged oppositely and snapped to each other to produce the case assembly 201 with a closed chamber. A plurality of battery cells 100 are connected in parallel, series, or parallel-series, and then placed in the closed chamber formed after the case 201A and the cover body 201B are snapped to each other.

The battery cell 100 may be a lithium-ion secondary battery, a lithium-ion primary battery, an LSB, a sodium/lithium-ion battery, or an MIB, for example.

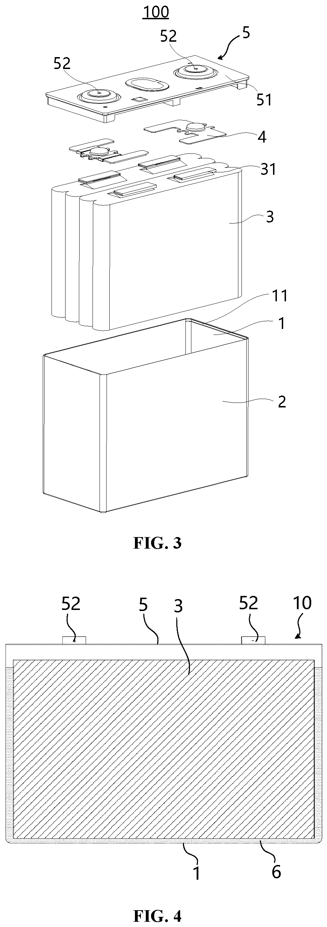

In some embodiments, as shown in FIG. 3 and FIG. 4, the battery cell 100 includes a housing 1, an electrode assembly 3, an end cover assembly 5, and two switching members 4, where the housing 1 has an opening 11, and the end cover assembly 5 closes the opening 11 and is connected with the housing 1 to produce a housing of the battery cell 100; an outer surface of the housing 1 is provided with an insulation layer 2; and the end cover assembly 5 includes an end cover body 51 and two electrode terminals 52 with opposite polarities.

The electrode assembly 3 is arranged in the housing 1, and the housing 1 is filled with an electrolyte 6. According to actual use needs, one or more electrode assemblies 3 can be provided. The electrode assembly 3 is produced by stacking or winding a first electrode plate and a second electrode plate that have opposite polarities, where a separator is usually arranged between the first electrode plate and the second electrode plate. A portion of the first electrode plate and a portion of the second electrode plate that each are coated constitute a major part of the electrode assembly 3; and a portion of the first electrode plate and a portion of the second electrode plate that each are not coated serve as two tabs 31 with opposite polarities, and the two tabs 31 each are electrically connected to an electrode terminal 52 of a same polarity through a switching member 4.

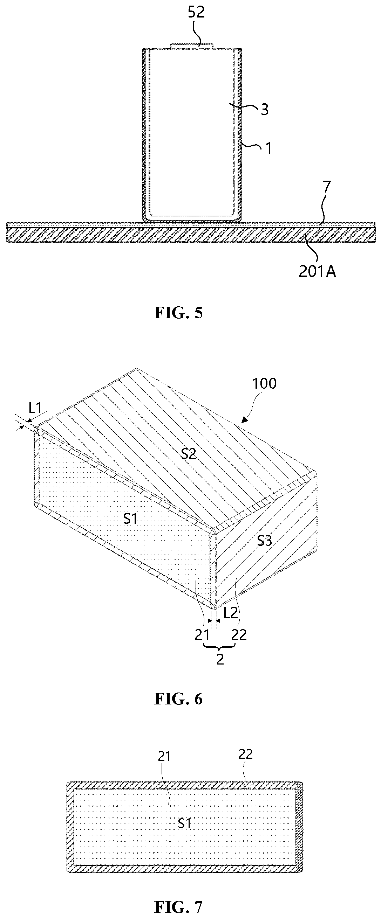

As shown in FIG. 5, the battery cell 100 may be directly arranged on an inner bottom surface of the case 201A, for example, the battery cell may be fixed on the inner bottom surface of the case 201A through a bonding layer 7. When an electric device with the battery cell such as the vehicle 300 is subjected to a vibration or impact, a shear force will be generated between the battery cell 100 and the inner bottom surface of the case 201A, and when the shear force is applied to the insulation layer 2, it is easy to cause the insulation layer 2 to fall off from the outer surface of the housing 1.

In some embodiments, as shown in FIG. 6 and FIG. 7, the battery cell 100 includes: a housing 1 and an insulation layer 2, where the housing 1 has an opening 11, and an outer surface of the housing includes at least one connection surface configured to fix the battery cell 100; and the insulation layer 2 includes an insulation coating 21 and an insulation film 22, where the insulation coating 21 covers at least a portion of one connection surface, and the outer surface of the insulation film 22 that covers the housing 1 is located outside the insulation coating 21.

The opening 11 of the housing 1 is closed by the end cover assembly 5, and the housing 1 may be made of aluminum or stainless steel. The insulation layer 2 is provided to cover the outer surface of the housing 1 to allow insulation for the housing 1, the end cover assembly 5 includes an end cover body 51, and an insulation strip may be provided separately on the end cover body 51 to allow insulation for the end cover body 51. Optionally, the insulation layer 2 can cover an edge of the end cover body 51, and the insulation layer 2 is pressed by an insulation strip to allow a reliable insulation effect.

An outer surface of the housing 1 includes at least one connection surface configured to fix the battery cell 100. For example, the connection surface may be provided for fixation to an inner bottom surface of the case 201A, an inner top surface of the cover body 201B, or an adjacent battery cell 100. Optionally, the connection surface can allow fixation through a bonding layer 7, and the bonding layer 7 can be made of a structural adhesive to allow a high fixed connection strength.

The battery cell 100 may be cuboid or cylindrical. If the battery cell 100 is cuboid, an outer surface of the housing 1 includes a total of five rectangular surfaces, including: a first surface S1, two second surfaces S2, and two third surfaces S3, where the first surface S1 is opposite to the opening 11; the two second surfaces S2 are adjacent to the opening 11 and arranged oppositely, and each have a relatively large area; the two third surfaces S3 are adjacent to the opening 11 and arranged oppositely, and each have a relatively small area; and at least one of the five rectangular surfaces is a connection surface, which is related to an arrangement orientation of the battery cell 100. If the battery cell 100 is cylindrical, an outer surface of the housing 1 includes a cylindrical side face and a circular end face, and the connection surface may be the circular end face.

The insulation layer 2 includes an insulation coating 21 and an insulation film 22, and the insulation coating 21 covers at least a portion of one connection surface. For example, the insulation coating 21 may merely cover a portion of one connection surface, or merely cover an entire region of one connection surface; or the insulation coating may cover a plurality of connection surfaces, where each connection surface may be partly or fully provided with the insulation coating 21.

The outer surface of the insulation film 22 that covers the outer surface of the housing 1is located outside the insulation coating 21, and the region of the outer surface of the housing 1 that is located outside the insulation coating 21 refers to a region on the outer surface of the housing 1 other than a region at which the insulation coating 21 is located, or a region on the outer surface of the housing 1 that is not covered with the insulation coating 21. Optionally, the insulation film 22 is butted with an edge of the insulation coating 21; or the insulation film 22 has an overlap region with the insulation coating 21. Due to a strong bonding force between the insulation coating 21 and the housing 1, the insulation coating 21 may preferably be arranged on a connection surface subjected to a shear force.

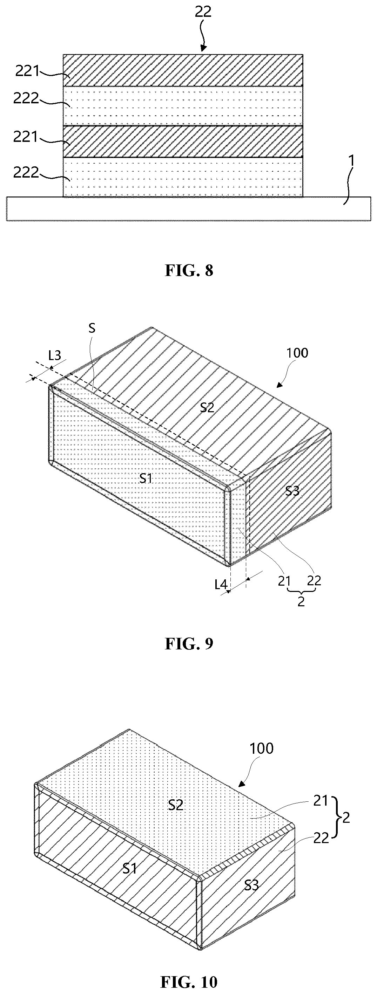

Optionally, the insulation film 22 may be a polyethylene terephthalate (PET) film, a polyimide (PI) film, a polypropylene (PP) film, a polybutylene terephthalate (PBT) film, a polyvinyl chloride (PVC) film, or a polyphenylene sulfide (PPS) film, but is not limited to the above materials. The insulation film 22 may be attached to an outer surface of the housing 1 through bonding. Optionally, the insulation film 22 may be a single-layer design, or may be a multi-layer design, such as 1 to 5 layers, which can improve the insulation performance and high-voltage resistance. As shown in FIG. 8, the insulation film 22 may include a plurality of film layers 221 and a plurality of adhesive layers 222, where two adjacent film layers 221 are connected through an adhesive layer 222, one of the plurality of film layers 221 is bonded to an outer surface of the housing 1 through an adhesive layer 222, and the plurality of adhesive layers 222 may each be made of a pressure-sensitive adhesive. Optionally, a thickness of the insulation film 22 may be in a range of 0.01 mm to 1 mm and preferably 0.05 mm to 0.2 mm.

Optionally, the insulation coating 21 includes an insulation substrate, or in order to allow specific performance, a modification component may be added to the insulation substrate. The insulation substrate and the modification component can each be selected from the group consisting of an acrylic resin, a polyurethane (PU) resin, an epoxy resin, an acrylic resin, an acrylic resin, and a silicone resin, but are not limited to the above materials. The insulation substrate may preferably be selected from the group consisting of an epoxy resin and an acrylic resin that have excellent insulation performance. Optionally, the insulation substrate and the modification component may be used in combination as follows: an acrylic resin is used in combination with a PU resin, an epoxy resin is used in combination with an acrylic resin, or an acrylic resin is used in combination with a silicone resin. For example, if an aging effect of bonding between an acrylic resin and a PU adhesive is unsatisfactory, an epoxy resin may be added to the acrylic resin to modify the entire formulation system. Optionally, the insulation coating 21 may be attached to a surface of the housing 1 through spray-coating, coating, or the like, and then dried and cured. Optionally, a thickness of the insulation coating 21 may be in a range of 0.01 mm to 1 mm and preferably 0.05 mm to 0.2 mm.

In this embodiment, a combination of the insulation coating 21 and the insulation film 22 is adopted as the insulation layer 2 of the housing 1. Because the insulation coating 21 has a strong bonding force with an outer surface of the housing 1, the pasting of the insulation coating 21 on the connection surface improves a shear strength between the insulation coating 21 and the housing 1, such that, even if the battery cell 100 is subjected to a vibration or impact during use to make the connection surface undergo a large shear force, the insulation coating 21 can also be prevented from falling off, which can ensure the insulation reliability. Moreover, when the battery cell is used in a high-temperature and high-humidity environment, it can also ensure that the insulation coating 21 is tightly bonded to the housing 1. For example, in a structure in which the battery cell 100 is directly used to assemble a battery 200 without producing a module, the battery cell 100 can bear a large shear force, and the fixation of the battery cell 100 through the connection surface at which the insulation coating 21 is located can also meet the requirements of insulation performance of the housing 1.

In addition, a region without the insulation coating 21 on an outer surface of the housing 1 is provided with the insulation film 22, which can avoid the problem that a spraying solution of the insulation coating 21 cannot be retained at a rounded corner of the housing 1 to cause a too-thin coating, and can reliably cover an outer surface of the housing 1, thereby ensuring a quality of the insulation layer 2 and the insulation reliability. The pasting of the insulation film 22 has a low cost, which can reduce a production cost of the battery cell 100.

Thus, the composite insulation with the insulation coating 21 and the insulation film 22 in the present application can improve a bonding force of the insulation layer 2 with the connection surface and the housing 1 to improve the reliability and safety of working of the battery cell 100, can avoid the disadvantage that the pasting of the insulation coating 21 can hardly allow a high coating quality and leads to a high cost, and can make the insulation reliability of the battery cell 100 and the application cost of the insulation layer 2 balanced.

In some embodiments, as shown in FIG. 6 and FIG. 7, the insulation coating 21 covers a portion of the connection surface, the insulation coating 21 is located in an intermediate region of the connection surface, and a region of the connection surface located outside the insulation coating 21 is covered by the insulation film 22.

A region on the connection surface that is located outside the insulation coating 21 may be covered by an entire insulation film 22, or may also be covered by a combination of a plurality of insulation films 22. The location of the insulation coating 21 in the intermediate region of the connection surface may include the following two cases: 1. The insulation coating 21 is located in the intermediate region in a direction of the connection surface. 2. The insulation coating 21 is located in the intermediate region in two directions of the connection surface.

After the arrangement of the battery cell 100, in order to make the insulation coating 21 mainly bear a shear force, an area of a region at which the insulation coating 21 is located on the connection surface is greater than an area of a region at which the insulation film 22 is located, and a coverage area of the insulation film 22 is reduced as much as possible. As shown in FIG. 6, a distance between the insulation coating 21 and a first side of the connection surface is L1, a distance between the insulation coating 21 and a second side of the connection surface is L2, and L1 and L2 may each be in a range of 1 mm to 15 mm.

Optionally, as shown in FIG. 6, a first surface S1 of the housing 1 that is opposite to the opening 11 is provided with an insulation coating 21; the insulation coating 21 covers a portion of the first surface S1, and the insulation coating 21 is located in an intermediate region in two directions of the first surface S1; and an entire peripheral region of the insulation coating 21 is covered by an insulation film 22. If the battery cell 100 is cuboid, the first surface S1 is rectangular, a coverage region of the insulation coating 21 is also rectangular, and an area of the coverage region is smaller than an area of the first surface S1. A region without the insulation coating 21 on an outer surface of the housing 1 is covered by an entire insulation film 22, and the insulation film 22 covers two second surfaces S2, two third surfaces S3, and a region of the first surface S1 that is located outside the insulation coating 21.

By allowing the insulation coating 21 to cover a portion of the connection surface, this embodiment can avoid the problem that a spraying solution of the insulation coating 21 can hardly be retained at a rounded corner of the housing 1, and can ensure the consistency of an overall thickness of the insulation coating 21, thereby improving a quality of the insulation coating 21 and the insulation reliability. Moreover, the insulation coating 21 is arranged on a plane, and the insulation film 22 is bonded to the insulation coating 21 on the plane, which can reduce the process difficulty and cost of pasting of the insulation coating 21. Since the insulation coating 21 is arranged in the intermediate region of the connection surface, after the battery cell 100 is arranged, the insulation coating 21 can mainly bear a shear force, which can reduce the process difficulty and cost of pasting of the insulation coating 21 on the basis of ensuring a bonding force between the insulation layer 2 on the connection surface and the housing 1.

In some embodiments, as shown in FIG. 9, the insulation coating 21 fully covers the connection surface.

For example, as shown in FIG. 9, the connection surface includes a first surface S1, and the insulation coating 21 covers the entire first surface S1. Optionally, the insulation coating 21 may also cover the entire second surface S2 or the entire third surface S3.

In this embodiment, since the insulation coating 21 fully covers the connection surface, after the battery cell 100 is arranged, a shear force for the entire connection surface can be borne through the insulation coating 21; and because the insulation coating 21 has a large bonding force with the housing 1, on the basis of ensuring a quality of the insulation layer 2 and controlling a cost, a shear strength of the insulation layer 2 on the connection surface can be maximized to prevent the insulation layer 2 on the connection surface from falling off from the housing 1, which ensures the insulation reliability, thereby improving the reliability and safety of working of the battery cell 100.

In some embodiments, as shown in FIG. 9, the insulation coating 21 further covers a region on the housing 1 that is adjacent to the connection surface fully covered by the insulation coating 21.

In addition to the entire connection surface, the insulation coating 21 covers a region on the housing 1 that is adjacent to the connection surface, that is, in order to ensure that the insulation coating 21 fully covers the connection surface, the insulation coating is applied in a range exceeding the connection surface by a part. For example, as shown in FIG. 9, the insulation coating 21 covers the entire first surface S1, a size of a portion of the insulation coating 21 on the second surface S2 beyond the first surface S1 is L3, and a size of a portion of the insulation coating 21 on the third surface S3 beyond the first surface S1 is L4. L3 is no more than 20% of an entire size of the second surface S2 in a direction perpendicular to the first surface S1, and L4 is no more than 20% of an entire size of the third surface S3 in the direction perpendicular to the first surface S1.

In this embodiment, the insulation film 22 can be prevented from bending to the connection surface with the insulation coating 21, which can reduce the process difficulty of pasting of the insulation film 22, improve the bonding reliability of the insulation film 22, and avoid the problem that the insulation film 22 is not easily bonded to and is easily disconnected from an edge of the housing 1. Thus, this arrangement manner can reduce the difficulty of pasting of the insulation film 22 on the basis of ensuring the insulation reliability for the housing 1.

In some embodiments, as shown in FIG. 9, the insulation coating 21 has an overlap region S with the insulation film 22.

The insulation coating 21 and the insulation film 22 may have an overlap region S at an entire junction, or may have an overlap region S at a partial junction. The overlap region S may be located on the connection surface or may be located on a surface other than the connection surface. Optionally, as shown in FIG. 6, the insulation coating 21 covers a portion of the first surface S1, and entire edges of the insulation film 22 and the insulation coating 21 have an overlap region S on the first surface S1. As shown in FIG. 9, the insulation coating 21 covers an entire region of the first surface S1 and extends to regions on the second surface S2 and the third surface S3 that are adjacent to the first surface S1, and the overlap region S is located on the second surface S2 and the third surface S2. For example, a width of the overlap region S should be more than 1 mm to guarantee an insulation effect.

In this embodiment, the arrangement of the overlap region S between the insulation coating 21 and the insulation film 22 can make the two well cover a surface of the housing 1 in a bonding zone, such that, even if the insulation film 22 undergoes a thermal deformation (shrinkage) and cracks or an edge is warped due to falling-off of an adhesive, the surface of the housing 1 is not easily exposed, thereby ensuring the insulation reliability for the housing 1 and improving the reliability and safety of working of the battery cell 100.

In some embodiments, as shown in FIG. 9, in a thickness direction of the insulation layer 2, the insulation film 22 is located outside the insulation coating 21 in the overlap region S.

The insulation film 22 is located outside the insulation coating 21 in the overlap region S, such that an edge of the insulation film 22 can cover the insulation coating 21, that is, the insulation coating 21 is located between the insulation film 22 and the housing 1; and the edge of the insulation film 22 is attached to the insulation coating 21 through bonding. Optionally, in a thickness direction of the insulation layer 2, the insulation film 22 can also be located inside the insulation coating 21 in the overlap region S.

In this embodiment, the insulation film 22 is located outside the insulation coating 21 in the overlap region S, such that an edge of the insulation film 22 can be attached to a surface of the stable insulation coating 21 with a large bonding force, which improves a connection strength of a junction between the insulation film 22 and the insulation coating 21n and avoids the occurrence of weak points that causes the tearing of the insulation film 22, and thereby improving the insulation reliability for the housing 1.

In some embodiments, the insulation film 22 has the overlap region S with an entire periphery of the insulation coating 21.

Optionally, if the battery cell 100 is cuboid, as shown in FIG. 6, the insulation coating 21 covers a portion of the first surface S1, the insulation coating 21 is rectangular and is located in a central region of the first surface S1, and the insulation film 22 may have an overlap region S with an entire circumference of the insulation coating 21; as shown in FIG. 9, the insulation coating 21 covers the entire first surface S1 and extends to regions on the two second surfaces S2 and the two third surfaces S3 that are adjacent to the first surface S1, an extension region of the insulation coating 21 is annular, and the insulation film 22 has an overlap region S with an entire circumference of the annular extension region of the insulation coating 21; and thus, in FIG. 6 and FIG. 9, the overlap region S is also annular.

Optionally, the battery cell 100 is cylindrical; if the insulation coating 21 covers a portion of the first surface of the housing 1 that is away from the opening 11, the insulation coating 21 is circular and is located in a central region of the first surface S1, and the insulation film 22 may have an overlap region S with an entire circumference of the insulation coating 21; if the insulation coating 21 covers an entire region of the first surface and extends to a region on a cylindrical side surface that is adjacent to the first surface S1, an extension region of the insulation coating 21 is annular, and the insulation film 22 has an overlap region S with an entire circumference of the annular extension region of the insulation coating 21; and thus, the overlap region S is also annular.

In this embodiment, the arrangement of the overlap region S between the insulation film 22 and the entire periphery of the insulation coating 21 can make the two reliably cover a surface of the housing 1 in a bonding zone, such that, even if the insulation film 22 undergoes a thermal deformation (shrinkage) and cracks or an edge is warped due to falling-off of an adhesive, the surface of the housing 1 is not easily exposed, thereby maximally ensuring the insulation reliability for the housing 1 and improving the reliability and safety of working of the battery cell 100.

In some embodiments, as shown in FIG. 9, the insulation film 22 has overlap regions S of equal widths with the periphery of the insulation coating 21.

The insulation coating 21 covers the entire first surface S1 and extends to regions on the second surface S2 and the third surface S3 that are adjacent to the first surface S1, and the insulation film 22 has overlap regions S of equal widths on a periphery of the extension region of the insulation coating 21; and a size of an extension region of the insulation coating 21 on the second surface S2 is L3, and a size of an extension region of the insulation coating on the third surface S3 is L4, where L3 = L4.

In this embodiment, the insulation film 22 has overlap regions of equal widths S with the periphery of the insulation coating 21, such that a bonding zone between the insulation film 22 and the insulation coating 21 has a uniform connection strength at different positions in a circumferential direction, which can not only improve the adhesion quality of the insulation layer 2 to ensure the insulation reliability for the housing 1, but also reduce the cutting difficulty of the insulation film 22 and the consumption of materials.

In some embodiments, the insulation film 22 is bonded to the housing 1 in a region outside the insulation coating 21, and the insulation film 22 is bonded to the insulation coating 21 in the overlap region S. For example, the bonding may be conducted through an adhesive such as a glue.

In this embodiment, since the pasting of the insulation film 22 is performed through bonding, the insulation film 22 can be reliably pasted by a simple process; and because there is a large adhesion force between the insulation coating 21 and an outer surface of the housing 1, the bonding of an edge of the insulation film 22 to the insulation coating 21 can prevent the disconnection between the two, thereby improving the insulation reliability.

In some embodiments, a surface of the housing 1 that is provided with the insulation coating 21 is a first surface S1 of the housing 1 that is away from the opening 11.

The first surface S1 is a surface on the housing 1 that is opposite to the opening 11; and the battery cell 100 is suitable for vertical arrangement in the case assembly 201 to produce a battery 200, and after the arrangement, the first surface S1 of the housing 1 is fixed as a connection surface on an inner bottom surface of the case assembly 201 through a bonding layer 7.

In this embodiment, when the battery cell 100 is placed vertically, if a battery 200 with the battery cell is subjected to a vibration and impact, a shear force will be generated between the first surface S1 and the case assembly 201, and because the first surface S1 covered by the insulation coating 21 can bear the shear force generated between the first surface S1 and the case assembly 201, the insulation layer 2 on the first surface S1 can be prevented from falling off, which improves the insulation reliability for the housing 1.

In some other embodiments, as shown in FIG. 10 to FIG. 12, a surface of the housing 1 that is provided with the insulation coating 21 is a second surface S2 of the housing 1 that is adjacent to the opening 11 and has a relatively large area.

The insulation coating 21 may be arranged on one of the two second surfaces S2, or the two second surfaces S2 each are provided with the insulation coating 21. The battery cell 100 is suitable for horizontal arrangement in the case assembly 201 to produce a battery 200, and the case assembly 201 includes a case 201A and a cover body 201B; and after the arrangement, a second surface S2 of the housing 1 is fixed as a connection surface on an inner bottom surface of the case 201A, an inner top surface of the cover body 201B, or a second surface S2 of another battery cell 100 through a bonding layer 7.

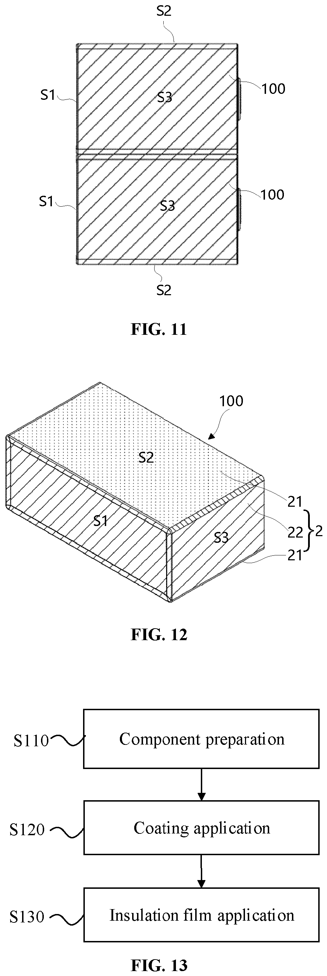

The battery cell 100 is horizontally arranged, that is, a thickness direction of the electrode assembly 3 is consistent with a thickness direction of the battery 200. If a single layer of battery cells 100 is arranged in a thickness direction of the battery 200, a second surface S2 of the housing 1 is fixed as a connection surface on an inner bottom surface of the case 201A through a bonding layer 7. As shown in FIG. 11, if two layers of battery cells 100 are arranged in a thickness direction of the battery 200, two second surfaces S2 of a battery cell 100 at a bottom layer are fixed through a bonding layer 7 respectively on an inner bottom surface of the case 201A and a second surface S2 of a battery cell 100 at a top layer, and two second surfaces S2 of a battery cell 100 at a top layer are fixed through a bonding layer 7 respectively on a second surface S2 of a battery cell 100 at the bottom layer and an inner top surface of the cover body 201B. Therefore, two opposite second surfaces S2 of the housing 1 both serve as a connection surface, and as shown in FIG. 12, two second surfaces S2 of the housing 1 each are covered by the insulation coating 21.

In this embodiment, when a battery cell 100 is arranged horizontally, if the battery 200 is subjected to a vibration and impact, a shear force will be generated between the second surface S2 and the inner bottom surface of the case 201A and between the second surface and the inner top surface of the cover body 201B or between adjacent battery cells 100, and because the second surface S2 covered by the insulation coating 21 can bear the shear force generated between the second surface S2 and the inner bottom surface of the case 201A and between the second surface and the inner top surface of the cover body 201B or between the adjacent battery cells 100, the insulation layer 2 on the second surface S2 can be prevented from falling off, which improves the insulation reliability for the housing 1.

A cuboid battery cell 100 is taken as an example, a structure of the battery cell 100 of the present application is described below through some specific embodiments.

In a first embodiment, as shown in FIG. 6, the battery cell 100 includes a housing 1 and an insulation layer 2, where the insulation layer 2 covers an entire outer surface of the housing 1, and the housing 1 includes a first surface S1, two second surfaces S2, and two third surfaces S3. The first surface S1 is opposite to an opening 11 of the housing 1; the two second surfaces S2 each are a surface that is adjacent to the opening 11 and perpendicular to a thickness direction of the electrode assembly 3, and each are generally a surface that is adjacent to the opening 11 and has a relatively large area, and the two second surfaces S2 are arranged oppositely; and the two third surfaces S3 each are a surface that is adjacent to the opening 11 and parallel to the thickness direction of the electrode assembly 3, and each are generally a surface that is adjacent to the opening 11 and has a small area, and the two third surfaces S3 are arranged oppositely.

The battery cell 100 is suitable for vertical arrangement; the first surface S1 is fixed on an inner bottom surface of the case 201A through a bonding layer 7, and a portion of the first surface 1 is covered by an insulation coating 21; and the two second surfaces S2 and the two third surfaces S2 each are covered by an insulation film 22, for example, the four surfaces may be covered by an entire insulation film 22, and an edge of the insulation film 22 is folded back to cover a region on the first surface S1 that is located on a periphery of the insulation coating 21. Optionally, the insulation film 22 has an overlap region S with the insulation coating 21, and in the overlap region S, the insulation film 22 is located outside the insulation coating 21, and an edge of the insulation film 22 is bonded to the insulation coating 21 on the first surface S1.

In a second embodiment, as shown in FIG. 9, this embodiment is different from the first embodiment in that: the insulation coating 21 covers the entire first surface S1 and regions on the second surface S2 and the third surface S3 that are adjacent to the first surface S1, that is, the insulation coating 21 is applied in a range exceeding the first surface S1 by a part. Width sizes of the excess part throughout a circumference of the first surface S1 are consistent. Optionally, the insulation film 22 has an overlap region S with the insulation coating 21, and in the overlap region S, the insulation film 22 is located outside the insulation coating 21, and an edge of the insulation film 22 is bonded to the insulation coating 21 on the second surface S2 and the third surface S3.

In a third embodiment, as shown in FIG. 10, this embodiment is different from the first embodiment in that: the insulation coating 21 covers an entire region of one of the two second surfaces S2, the insulation film 22 covers the first surface S1, the other one of the two second surfaces S2, and the two third surfaces S3, and the insulation film 22 may adopt a monolithic structure.

The battery cell 100 is suitable for horizontal arrangement. For a structure in which a single layer of battery cells 100 is arranged in the battery 200, when the connection between the battery cells 100 and the inner bottom surface of the case 201A meets fixation requirements, only one of the two second surfaces S2 can be provided with the insulation coating 21, and the second surface S2 with the insulation coating 21 is fixed on the inner bottom surface of the case 201A through a bonding layer 7.

In a fourth embodiment, as shown in FIG. 11 and FIG. 12, this embodiment is different from the third embodiment in that: a plurality of layers of battery cells 100 are arranged in the battery 200, for example, two or more layers of battery cells are arranged in the battery. Two layers of battery cells 100 is taken as an example, two second surfaces S2 of a battery cell 100 at a bottom layer are connected through a bonding layer 7 respectively to an inner bottom surface of the case 201A and a second surface S2 of an adjacent battery cell 100 at a top layer; and two second surfaces S2 of a battery cell 100 at a top layer are connected through a bonding layer 7 respectively to an inner bottom surface of the cover body 201B and a second surface S2 of an adjacent battery cell 100 at a bottom layer. Thus, the two second surfaces S2 of the battery cell 100 both serve as a connection surface, and in order to improve a shear strength of the insulation layer 2, the two second surfaces S2 each are covered by the insulation coating 21.

On the basis of the above embodiments, the present application provides a battery 200. In some embodiments, the battery includes: a case assembly 201 and a battery cell 100 described in the above embodiments, where the battery cell 100 is arranged in the case assembly 201; and one or more battery cells 100 may be provided.

In this embodiment, the use of the combination of the insulation coating 21 and the insulation film 22 as the insulation layer 2 in the battery cell 100 can improve a bonding force of the insulation layer 2 with the connection surface and the housing 1 to improve the reliability and safety of working of the battery 200, can avoid the disadvantage that the pasting of the insulation coating 21 can hardly allow a high coating quality and leads to a high cost, and can make the insulation reliability of the battery cell 100 and the application cost of the insulation layer 2 balanced.

In some embodiments, the case assembly 201 includes a case 201A, the connection surface includes the first surface S1 of the housing 1 that is away from the opening 11, the first surface S1 is provided with the insulation coating 21, and the first surface S1 is connected to an inner bottom surface of the case 201A through a bonding layer 7.

In the battery 200, the battery cell 100 is placed vertically in the case 201A, and the first surface S1 is connected to an inner bottom surface of the case 201A through a bonding layer 7. A plurality of battery cells 100 may be arranged side-by-side in a preset direction, and second surfaces S2 of two adjacent battery cells 100 are attached to each other and connected through a bonding layer 7.

In this embodiment, for a battery cell 100 arranged vertically, because the first surface S1 of the housing 1 that is connected to the inner bottom surface of the case 201A is provided with the insulation coating 21, if the battery 200 is subjected to a vibration and impact, a shear force will be generated between the first surface S1 and the inner bottom surface of the case 201A; and because the first surface S1 covered by the insulation coating 21 can bear the shear force generated between the first surface S1 and the inner bottom surface of the case 201A, the insulation layer 2 on the first surface S1 can be prevented from falling off, which improves the insulation reliability for the housing 1.

In some embodiments, the case assembly 201 includes a case 201A and a cover body 201B that are fastened with each other; the connection surface includes a second surface S2 of the housing 1 that is adjacent to the opening 11 and has a relatively large area, and the second surface S2 is provided with an insulation coating 21; and the second surface S2 is connected to an inner bottom surface of the case 201A through a bonding layer 7, or the second surface S2 is connected to an inner top surface of the cover body 201B through a bonding layer 7, or the second surface S2 is connected to an adjacent battery cell 100 through a bonding layer 7.

In the battery 200, the battery cell 100 is arranged horizontally in the case assembly 201, that is, a thickness direction of the electrode assembly 3 is consistent with a thickness direction of the battery 200; or the thickness direction of the electrode assembly 3 is perpendicular to the second surface S2. If a single layer of battery cells 100 is arranged in a thickness direction of the battery 200, a second surface S2 of the housing 1 is fixed as a connection surface on an inner bottom surface of the case 201A through a bonding layer 7. As shown in FIG. 11, if two layers of battery cells 100 are arranged in a thickness direction of the battery 200, two second surfaces S2 of a battery cell 100 at a bottom layer are fixed through a bonding layer 7 respectively on an inner bottom surface of the case 201A and a second surface S2 of a battery cell 100 at a top layer, and two second surfaces S2 of a battery cell 100 at a top layer are fixed through a bonding layer 7 respectively on a second surface S2 of a battery cell 100 at the bottom layer and an inner top surface of the cover body 201B. Therefore, two opposite second surfaces S2 of the housing 1 both serve as a connection surface, and as shown in FIG. 12, two second surfaces S2 of the housing 1 each are covered by the insulation coating 21.

In this embodiment, for a battery cell 100 arranged horizontally, if the battery 200 is subjected to a vibration and impact, a shear force will be generated between the second surface S2 and the inner bottom surface of the case 201A and between the second surface and the inner top surface of the cover body 201B or between adjacent battery cells 100, and because the second surface S2 covered by the insulation coating 21 can bear the shear force generated between the second surface S2 and the inner bottom surface of the case 201A and between the second surface and the inner top surface of the cover body 201B or between the adjacent battery cells 100, the insulation layer 2 on the second surface S2 can be prevented from falling off, which improves the insulation reliability for the housing 1.

In some embodiments, the insulation coating 21 covers a portion of the connection surface, the insulation coating 21 is located in an intermediate region of the connection surface, and a region of the connection surface located outside the insulation coating 21 is covered by the insulation film 22; the insulation coating 21 has an overlap region S with the insulation film 22; in a thickness direction of the insulation layer 2, the insulation film 22 is located outside the insulation coating 21 in the overlap region S; and a thickness of the bonding layer 7 in the insulation coating 21 is greater than a thickness of the insulation film 22.

The connection surface may be a first surface S1, a second surface S2, or a third surface S2 of the housing 1; the insulation film 22 is located outside the insulation coating 21 in the overlap region S, such that the insulation coating 21 is recessed inward with respect to the peripheral insulation film 22; and a thickness of the bonding layer 7 in the insulation coating 21 is greater than a thickness of the insulation film 22, such that the bonding layer 7 can fill a region of the insulation coating 21 that is recessed inward with respect to the insulation film 22 to make the insulation layer 2 on the connection surface form a plane for fixation.

In this embodiment, the bonding layer 7 can be allowed to fill a region of the insulation coating 21 that is recessed inward with respect to the insulation film 22, such that the insulation layer 2 on the connection surface forms a plane for fixation to prevent a virtual contact between the insulation coating 21 and a surface to be fixed, and the insulation coating 21 can mainly bear a shear force between the connection surface and the surface to be fixed to prevent the insulation film 22 on the connection surface that is located on the periphery of the insulation coating 21 from bearing excessive shear force, which can prevent the insulation film 22 from falling off and improve the reliability of connection between the insulation film 22 and the insulation coating 21, thereby ensuring the insulation reliability for the housing 1.

The present application provides a manufacturing method of the battery cell 100, as shown in FIG. 13, including the following steps.

At step S 110: component preparation step: A housing 1 is provided, where the housing 1 has an opening 11, and an outer surface of the housing includes at least one connection surface configured to fix the battery cell 100.

At step S120: coating pasting step: An insulation coating 21 is applied on an outer surface of the housing 1, where the insulation coating 21 covers at least a portion of one connection surface.

At step S130: insulation film wrapping step of An insulation film 22 is wrapped around the outer surface of the housing 1, where the outer surface of the insulation film 22 that covers the housing 1 is located outside the insulation coating 21.

The steps S120 and S130 are performed after the step S110, and an order of execdution of the steps S120 and S130 is not limited.

In this embodiment, the use of the composite insulation with the insulation coating 21 and the insulation film 22 in the manufacturing method of the battery cell 100 can improve a bonding force of the insulation layer 2 with the connection surface and the housing 1 to improve the reliability and safety of working of the battery cell 100, can avoid the disadvantage that the pasting of the insulation coating 21 can hardly allow a high coating quality and leads to a high cost, and can make the insulation reliability of the battery cell 100 and the application cost of the insulation layer 2 balanced.

In some embodiments, the insulation coating 21 has an overlap region S with the insulation film 22; the coating pasting step S 120 is performed before the insulation film wrapping step S 130; and the insulation film 22 is bonded to the insulation coating 21 in the overlap region S.

In this embodiment, the insulation film 22 is bonded to the insulation coating 21 in the overlap region S, due to this arrangement, an edge of the insulation film 22 can be attached to a surface of the stable insulation coating 21 with a large bonding force, a connection strength of the conjunction between the insulation film 22 and the insulation coating 21 is improved, and the occurrence of weak points that causes the tearing of the insulation film 22 is avoided, and the insulation reliability for the housing 1 is improved accordingly.

Although the present application has been described with reference to the preferable embodiments, various improvements can be made and components therein can be replaced with equivalents without departing from the scope of the present application. In particular, the technical features in the embodiments may be combined in any manner without structural conflicts. The present application is not limited to the specific embodiments disclosed herein, but should include all technical solutions fallen within the scope of the claims.

## Claims

1. A battery cell (100), comprising:
a housing (1), wherein the housing (1) has an opening (11), and an outer surface of the housing (1) comprises at least one connection surface configured to fix the battery cell (100); and
an insulation layer (2) comprising an insulation coating (21) and an insulation film (22), wherein the insulation coating (21) covers at least a portion of one connection surface, and an outer surface of the insulation film (22) that covers the housing (1) is located outside the insulation coating (21).

2. The battery cell (100) according to claim 1, wherein the insulation coating (21) covers a portion of the connection surface, the insulation coating (21) is located in an intermediate region of the connection surface, and a region of the connection surface located outside the insulation coating (21) is covered by the insulation film (22).

3. The battery cell (100) according to claim 1, wherein the insulation coating (21) fully covers the connection surface.

4. The battery cell (100) according to claim 3, wherein the insulation coating (21) further covers a region on the housing (1) being adjacent to the connection surface fully covered by the insulation coating (21).

5. The battery cell (100) according to claim 1, wherein the insulation coating (21) has an overlap region (S) with the insulation film (22).

6. The battery cell (100) according to claim 5, wherein in a thickness direction of the insulation layer (2), the overlap region (S) of the insulation film (22) is located outside the insulation coating (21).

7. The battery cell (100) according to claim 5 or 6, wherein the insulation film (22) has the overlap region (S) with an entire periphery of the insulation coating (21).

8. The battery cell (100) according to any one of claims 5 to 7, wherein the insulation film (22) has overlap regions (S) of equal widths with the periphery of the insulation coating (21).

9. The battery cell (100) according to any one of claims 5 to 8, wherein a region of the insulation film (22) outside the insulation coating (21) is bonded to the housing (1), and the overlap region (S) of the insulation film (22) is bonded to the insulation coating (21).

10. The battery cell (100) according to any one of claims 1 to 9, wherein
a surface of the housing (1) provided with the insulation coating (21) is a first surface (S1) of the housing (1) away from the opening (11); and/or
a surface of the housing (1) provided with the insulation coating (21) is a second surface (S2) of the housing (1) being adjacent to the opening (11) and having a relatively large area.

11. A battery (200), comprising:
a case assembly (201); and
the battery cell (100) according to any one of claims 1 to 10, wherein the battery cell (100) is arranged in the case assembly (201).

12. The battery (200) according to claim 11, wherein the case assembly (201) comprises a case (201A), the connection surface comprises a first surface (S1) of the housing (1) away from the opening (11), the first surface (S1) is provided with the insulation coating (21), and the first surface (S1) is connected to an inner bottom surface of the case (201A) through a bonding layer (7).

13. The battery (200) according to claim 11, wherein the case assembly (201) comprises the case (201A) and a cover body (201B) that are fastened with each other; the connection surface comprises a second surface (S2) of the housing (1) being adjacent to the opening (11) and has a relatively large area, and the second surface (S2) is provided with the insulation coating (21); and
wherein the second surface (S2) is connected to an inner bottom surface of the case (201A) through a bonding layer (7), or alternatively, the second surface (S2) is connected to an inner top surface of the cover body (201B) through the bonding layer (7), or alternatively, the second surface (S2) is connected to an adjacent battery cell (100) through the bonding layer (7).

14. The battery (200) according to claim 12 or claim 13, wherein the insulation coating (21) covers a portion of the connection surface, the insulation coating (21) is located in an intermediate region of the connection surface, and a region of the connection surface located outside the insulation coating (21) is covered by the insulation film (22);
the insulation coating (21) has an overlap region (S) with the insulation film (22); in a thickness direction of the insulation layer (2), the overlap region (S) of the insulation film (22) is located outside the insulation coating (21); and a thickness of the bonding layer (7) in the insulation coating (21) is greater than a thickness of the insulation film (22).

15. An electric device, comprising the battery (200) according to any one of claims 11 to 14, the battery (200) is configured to supply electric energy for the electric device.

16. A manufacturing method of a battery cell (100), comprising:
a component preparation step of providing a housing (1), wherein the housing (1) has an opening (11), and an outer surface of the housing comprises at least one connection surface configured to fix the battery cell (100);
a coating pasting step of pasting an insulation coating (21) on an outer surface of the housing (1), wherein the insulation coating (21) covers at least a portion of one connection surface; and
an insulation film wrapping step of wrapping an insulation film (22) around the outer surface of the housing (1), wherein an outer surface of the insulation film (22) that covers the housing (1) is located outside the insulation coating (21).

17. The manufacturing method according to claim 16, wherein the insulation coating (21) has an overlap region (S) with the insulation film (22); the coating pasting step is performed before the insulation film wrapping step; and the insulation film (22) is bonded to the insulation coating (21) in the overlap region (S).
